# EUROPÄISCHE PATENTSCHRIFT

(11) **EP 0 472 080 B1**
(45) Veröffentlichungstag und Bekanntmachung des Hinweises auf die Patenterteilung: **08.11.1995**
(21) Anmeldenummer: 91113487.2
(22) Anmeldetag: 12.08.1991
(51) Int. Cl.: C08G 18/66, C08J 9/14

(54) **Verfahren zur Herstellung von harten Polyurethanschaumstoffen**
Process for the preparation of rigid polyurethane foams
Procédé de préparation de mousses rigides de polyuréthane

(30) Priorität: 24.08.1990 DE 4026702
(43) Veröffentlichungstag der Anmeldung: 26.02.1992
(73) Patentinhaber: BAYER AG, 51368 Leverkusen (DE)
(72) Erfinder: Wiedermann, Rolf, Dr., W-5068 Odenthal (DE); Heilig, Gerhard, Dr., W-5060 Bergisch Gladbach 2 (DE); Schmitz, Wolfgang, W-5068 Odenthal (DE)

(56) Entgegenhaltungen:
- EP-A- 0 151 401
- EP-A- 0 308 733
- US-A- 4 940 632

## Beschreibung

Die vorliegende Erfindung betrifft ein Verfahren zur Herstellung flammgeschützter, FCKW-freier Polyurethan-Hartschaumstoffe.

Der Ersatz von FCKW als Treibmittel in Polyurethan-Hartschaumstoffen durch andere Treibmittel, z.B. CO₂, ist problematisch, da
- die Rohdichte angehoben werden muß, um dimensionsstabile Produkte zu erhalten und
- das Brandverhalten der Schaumstoffe in der Regel verschlechtert wird.

Die Verwendung von Kohlenwasserstoffen, z.B. Pentan, als Treibmittel, ermöglicht zwar die Herstellung von Schaumstoffen mit "normalen" Rohdichten um 30 kg/m³, hat aber einen sehr ungünstigen Einfluß auf das Brandverhalten.

Um solche Hartschaumstoffe mit einem notwendigen Flammschutz auszurüsten, wurden verschiedentlich feste Flammschutzmittel vorgeschlagen, z.B. gemäß GB-A 2 177 405, GB-AS 2 177 406 oder EP-A 239 891. Diese haben jedoch wesentliche Nachteile. Sie sind in kontinuierlichen Produktionsprozessen mit Hochdrucktechnik schwer dosierbar. Zudem führen sie zur Versprödung der Hartschaumstoffe.

Es wurden nun überraschend Schaumstofformulierungen gefunden, die es gestatten, mit flüssigen Flammschutzmitteln unter Verwendung von Wasser und Kohlenwasserstoffen als Treibmittel flammgeschützte Polyurethan-Hartschaumstoffe herzustellen, die den Anforderungen der Brandklasse B2 nach DIN 4102 bzw. der Klasse V nach dem Schweizer BVD-Test entsprechen.

Aus der EP-A 0 151 401 ist bereits die Herstellung von harten, geschlossenzelligen flammfesten Polyurethanschaumstoffen unter Verwendung von Wasser, organischen Treibmitteln und Flammschutzmitteln bekannt. Aus dieser EP-A geht jedoch nicht hervor, daß es bei Einsatz von hohen Mengen bei Raumtemperatur flüssiger Flammschutzmitteln gelingt, mit Wasser und C₁-C₆-Kohlenwasserstoffen als Treibmittel geschäumte Polyurethan-Hartschaumstoffe herzustellen, die den oben genannten technischen Anforderungen entsprechen.

Gegenstand der Erfindung ist ein Verfahren zur Herstellung von harten Polyurethanschaumstoffen durch Umsetzung von
1) Polyisocyanaten mit
2) mindestens zwei gegenüber Isocyanaten aktive Wasseratome aufweisenden Polyestern vom Molekulargewicht 400 bis 10.000, gegebenenfalls unter anteilige Mitverwendung (bis zu 50 Gew.-%, bezogen auf Polyester) von mindestens 2 Hydroxylgruppen aufweisenden Polyethern, Polycarbonaten, Polylactonen und Polyamiden vom Molekulargewicht 400 bis 10.000, in Gegenwart von
3) Wasser und organischen Treibmitteln und von
4) Flammschutzmitteln sowie von
5) Verbindungen mit mindestens zwei gegenüber Isocyanaten reaktionsfähigen Wasserstoffatomen und einem Molekulargewicht von 32 bis 399 als Vernetzer, gegebenenfalls in Gegenwart von
6) an sich bekannten Hilfs- und Zusatzstoffen,
dadurch gekennzeichnet, daß als organisches Treibmittel der Komponente 3) C₁-C₆-Kohlenwasserstoffe und als Flammschutzmittel 4) bei 20°C flüssige Produkte verwendet werden und daß man die Polyesterkomponente 2), das Flammschutzmittel 4) und die Vernetzerkomponente 5) als Formulierung einsetzt, in der
die Komponente 2) zu 15 bis 35 Gew.-Teilen,
die Komponente 4) in einer Menge von 50 bis 80 Gew.-Teilen und
die Komponente 5) in einer Menge von 5 bis 15 Gew.-Teilen
enthalten ist, wobei sich die Gew.-Teile dieser Komponenten zu 100 ergänzen.

Erfindungsgemäß wird bevorzugt Pentan als organisches Treibmittel verwendet.

Die Erfindung betrifft auch die Verwendung der nach dem oben genannten Verfahren erhältlichen harten Polyurethanschaumstoffe im Bauwesen, für die Isolierung des Motorbereichs von Last- und Personenkraftwagen, als Beschichtungsstoffe und zur flächigen Isolierung von Motorhauben zwecks Schallschutz.

Für die Herstellung der Polyurethanschaumstoffe werden als Ausgangskomponenten eingesetzt:
1. Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

   Q(NCO)ₙ

   in der
   - n: 2 bis 4, vorzugsweise 2, und
   - Q: einen aliphatischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 10, C-Atomen, einen aromatischen Kohlenwasserstoffrest mit 6 bis 15, vorzugsweise 6 bis 13, C-Atomen oder einen araliphatischen Kohlenwasserstoffrest mit 8 bis 15, vorzugsweise 8 bis 13, C-Atomen bedeuten, z.B. solche Polyisocyanate, wie sie in der DE-OS 28 32 253, Seiten 10 bis 11, beschrieben werden.

   Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.
2. Ausgangskomponenten sind ferner Polyester mit mindestens zwei gegenüber Isocyanaten reaktionsfähigen Wasserstoffatomen und einem Molekulargewicht in der Regel von 400 bis 10.000. Hierunter versteht man neben Aminogruppen, Thiolgruppen oder Carboxylgruppen aufweisenden Verbindungen vorzugsweise Hydroxylgruppen aufweisende Verbindungen, insbesondere 2 bis 8 Hydroxylgruppen aufweisende Verbindungen, speziell solche vom Molekulargewicht 1.000 bis 8.000, Vorzugsweise 2.000 bis 4.000, z.B. derartige, mindestens 2, in der Regel 2 bis 8, vorzugsweise 2 bis 4, Hydroxylgruppen aufweisende Verbindungen, wie sie für die Herstellung von homogenen und von zellförmigen Polyurethanen an sich bekannt sind und wie sie z.B. in der DE-OS 28 32 253, Seiten 11 bis 18, beschrieben werden.
   Anteilig (bis zu 50 Gew.-%, bezogen auf Polyester) können auch mindestens 2 Hydroxylgruppen aufweisende Polyether, Polycarbonate, Polylactone und Polyamide vom Molekulargewicht 400 bis 10.000 mitverwendet werden.
3. Als Treibmittel werden Wasser und C₁-C₆-Kohlenwasserstoffe, vorzugsweise Pentan, verwendet. Als Pentan kommt n-Pentan und seine Isomeren in Frage, besonders bevorzugt ist Isopentan.
4. Als Flammschutzmittel werden an sich bekannte, bei 20°C flüssige Produkte, verwendet.
5. Ausgangskomponenten sind ferner Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19 bis 20, beschrieben.
6. Gegebenenfalls mitverwendet werden an sich bekannte Hilfs- und Zusatzstoffe, wie Emulgatoren und Schaumstabilisatoren. Als Emulgatoren sind solche auf Basis alkoxilierter Fettsäuren und höherer Alkohole bevorzugt.
   Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 28 34 748, 29 17 480 und 36 29 308 beschrieben. Auch die aus der Polyurethanchemie an sich bekannten Katalysatoren wie tert.-Amine und/oder metallorganische Verbindungen können mitverwendet werden.
   Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, Weichmachern, Farbstoffen und Füllstoffen sowie fungistatisch und bakteriostatisch wirksamen Substanren sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemäßen Verfahrens:
Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hansen-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 31 78 490 und 31 82 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-OS 21 21 670 und 23 07 589 bekanntgeworden sind.

Selbstverständlich können aber auch Schaumstoffe durch Blockverschäumung oder nach dem an sich bekannten Doppeltransportbandverfahren hergestellt werden.

Die nach der Erfindung erhältlichen Hartschaumstoffe finden dort Anwendung, wo erhöhte Flammwidrigkeit für Polyurethanschaumstoffe erforderlich sind, wie z.B. im Bauwesen, für die Isolierung des Motorbereichs von Last- und Personenkraftwagen, als Beschichtungsstoffe mit erhöhter Flammwidrigkeit und zur flächigen Isolierung von Motorhauben zur Schallschutzwirkung.

### Ausführungsbeispiele

### Ausgangsprodukte

### Polyol A (Vergleich):

Es wurde eine Mischung (Formulierung) folgender Komponenten hergestellt:
100 Gew.-Teile eines Polyolgemisches der OH-Zahl 533 und der Viskosität 3400 mPas bei 25°C, bestehend aus:
25 Gew.-Teilen eines Polyethers der Hydroxylzahl 470, hergestellt durch Ethoxylierung und Propoxylierung von o-Toluylendiamin,
27 Gew.-Teilen eines Polyesters der Hydroxylzahl 440, hergestellt durch Propoxylierung eines Umsetzungsproduktes von Phthalsäure, Sorbit und Diethylenglykol,
15 Gew.-Teilen eines Polyethers der Hydroxylzahl 630, hergestellt durch Propoxylierung von Ethylendiamin,
16 Gew.-Teilen eines Polyethers der Hydroxylzahl 450, hergestellt durch Propoxylierung eines Gemisches von Zucker und Ethylenglykol,
7 Gew.-Teilen Glycerin
10 Gew.-Teilen Tris(β-chlorethyl)phosphat als Flammschutzmittel.

### Polyol B (erfindungsgemäß):

Es wurde eine Mischung (Formulierung) folgender Komponenten hergestellt:
100 Gew.-Teile eines Polyolgemisches der OH-Zahl 430, bestehend aus:
10 Gew.-Teilen eines Polyesters der Hydroxylzahl 380, hergestellt aus Adipinsäure, Phthalsäureanhydrid, Ölsäure und Trimethylolpropan
10 Gew.-Teilen eines Polyesters der Hydroxylzahl 460, hergestellt durch Propoxylierung eines Umsetzungsprodukts von Phthalsäureanhydrid, Sorbit und Diethylenglycol
10 Gew.-Teilen Glycerin
50 Gew.-Teilen des handelsüblichen Flammschutzmittels "Ixol® B 251" der Fa. Kali-Chemie, Hannover
20 Gew.-Teilen Tris(β-chlorisopropyl)phosphat als Flammschutzmittel.

### Polyol C (erfindungsgemäß):

Es wurde eine Mischung (Formulierung) folgender Komponenten hergestellt:
100 Gew.-Teile eines Polyolgemisches der OH-Zahl 436, bestehend aus:
20 Gew.-Teilen eines Polyesters der Hydroxylzahl 460, hergestellt durch Propoxylierung eines Umsetzungsprodukts von Phthalsäureanhydrid, Sorbit und Diethylenglycol
10 Gew.-Teilen Glycerin
50 Gew.-Teilen des handelsüblichen Flammschutzmittels "Ixol® B 251" der Fa. Kali-Chemie, Hannover
20 Gew.-Teilen Tris(β-chlorisopropyl)phosphat als Flammschutzmittel.

### Polyol D (erfindungsgemäß):

Es wurde eine Mischung (Formulierung) folgender Komponenten hergestellt:
100 Gew.-Teile eines Polyolgemisches der OH-Zahl 430, bestehend aus:
20 Gew.-Teilen eines Polyesters der Hydroxylzahl 380, hergestellt aus Adipinsäure, Phthalsäureanhydrid, Ölsäure und Trimethylolpropan
10 Gew.-Teilen Glycerin
50 Gew.-Teilen des handelsüblichen Flammschutzmittels "Ixol® B 251" der Fa. Kali-Chemie, Hannover
20 Gew.-Teilen Tris(β-chlorisopropyl)phosphat als Flammschutzmittel.

Die Verschäumungen dieser Formulierungen erfolgt unter an sich bekannten Bedingungen gemäß nachstehenden Rezepturen.

**Tabelle 1**

| (Vergleich) | | | |
|---|---|---|---|
| Rezeptur in Gew.-Teilen, Vergleichsbeispiele | 1 | 2 | 3 |
| Polyol A | 75 | 75 | 75 |
| Ixol B 251 | 15 | 15 | 15 |
| Tris(β-chlorpropyl)phosphat | 10 | 10 | 10 |
| Dimethylcyclohexylamin | 1,2 | 1,0 | 1,1 |
| Stabilisator VPAC 3279 | 1,0 | 1,0 | 1,0 |
| Wasser | 0,6 | 0,6 | 2,5 |
| Trichlorfluormethan | 36 | - | - |
| n-Pentan | - | 10 | 10 |
| Polyisocyanat (Roh-MDI, (Roh-MDI, Desmodur® 44V70) ( Bayer AG, Leverkusen) | 130 | 130 | 162 |
| Sprödigkeit | keine | wenig | stark |
| Haftung der Papierdeckschicht nach 24 Stunden | sehr gut | gut | schlecht |
| Rohdichte [kg/m³] | 28 | 39 | 28 |
| φ Flammenhöhe im Kleinbrennertest DIN 4102 [mm] | 130 | über 200 | über 200 |
| Klassifizierung nach DIN 4102 | B 2 | B 3 | B 3 |

Die in Tabelle 1 aufgeführten Ergebnisse zeigen, daß die Verwendung von Pentan und die Verwendung größerer Wassermengen ungünstig auf die Schaumstoffqualität und das Brandverhalten wirken.

Die erfindungsgemäßen Polyolformulierungen werden nach folgenden Rezepturen vorschäumt:

**Tabelle 2**

| (erfindungsgemäß) | | | | | |
|---|---|---|---|---|---|
| Rezeptur in Gew.-Teilen, Beispiele | 1 | 2 | 3 | 4 | 5 |
| Polyol B | 100 | 100 | - | - | - |
| Polyol C | - | - | 100 | - | - |
| Polyol D | - | - | - | 100 | 100 |
| Dimethylcyclohexylamin | 1,4 | 1,4 | 1,4 | 1,4 | 1,4 |
| Stabilisator VPAC 3279 (Bayer AG, Leverkusen) | 1,5 | 1,5 | 1,5 | 1,5 | 1,5 |
| Wasser | 2,0 | 2,0 | 2,0 | 2,0 | 2,0 |
| n-Pentan | 10 | 10 | 10 | 10 | 10 |
| Polyisocyanat (Roh-MDI, Desmodur® 44V20) (Bayer AG, Leverkusen) | 148 | - | - | 146 | - |
| Polyisocyanat (Roh-MDI, Desmodur® 44V70) (Bayer AG, Leverkusen) | - | 148 | 150 | - | 146 |
| Sprödigkeit | wenig | wenig | wenig | wenig | wenig |
| Haftung der Papierdeckschicht nach 24 Stunden | gut | gut | gut | gut | gut |
| Rohdichte [kg/m³] | 29 | 29,5 | 29 | 28,5 | 29 |
| φ Flammenhöhe im Kleinbrennertest DIN 4102 [mm] | 120 | 103 | 117 | 123 | 117 |
| Klassifizierung nach DIN 4102 | B 2 | B 2 | B 2 | B 2 | B 2 |
| φ Flammhöhe im Schweizer BVD-Test [mm] | 130 | 113 | 117 | 127 | 127 |
| Klassifizierung im BVD-Test | V | V | V | V | V |

Aus den Ergebnissen der Tabelle 2 ist zu ersehen, daß alle erfindungsgemäßen Polyolmischungen bei der Verschäumung mit n-Pentan und Wasser sowohl die Brandklassifizierung B2 nach DIN 4102 als auch die Klasse V im Schweizer BVD-Test erreichen. Sprödigkeit und Haftung der Deckschichten können als gut bezeichnet werden.

## Patentansprüche

1. Verfahren zur Herstellung von harten Polyurethanschaumstoffen durch Umsetzung von
1) Polyisocyanaten mit
2) mindestens zwei gegenüber Isocyanaten aktive Wasseratome aufweisenden Polyestern vom Molekulargewicht 400 bis 10.000, gegebenenfalls unter anteiliger Mitverwendung (bis zu 50 Gew.-%, bezogen auf Polyester) von mindestens 2 Hydroxylgruppen aufweisenden Polyethern, Polycarbonaten, Polylactonen und Polyamiden vom Molekulargewicht 400 bis 10.000, in Gegenwart von
3) Wasser und organischen Treibmitteln und von
4) Flammschutzmitteln sowie von
5) Verbindungen mit mindestens zwei gegenüber Isocyanaten reaktionsfähigen Wasserstoffatomen und einem Molekulargewicht von 32 bis 399 als Vernetzer, gegebenenfalls in Gegenwart von
6) an sich bekannten Hilfs- und Zusatzstoffen,
dadurch gekennzeichnet, daß als organisches Treibmittel der Komponente 3) C₁-C₆-Kohlenwasserstoffe und als Flammschutzmittel 4) bei 20°C flüssige Produkte verwendet werden und daß man die Polyesterkomponente 2), das Flammschutzmittel 4) und die Vernetzerkomponente 5) als Formulierung einsetzt, in der
die Komponente 2) zu 15 bis 35 Gew.-Teilen,
die Komponente 4) in einer Menge von 50 bis 80 Gew.-Teilen und
die Komponente 5) in einer Menge von 5 bis 15 Gew.-Teilen
enthalten ist, wobei sich die Gew.-Teile dieser Komponenten zu 100 ergänzen.

2. Verfahren gemäß Anspruch 1, dadurch gekennzeichnet, daß als organisches Treibmittel Pentan verwendet wird.

3. Verfahren gemäß Anspruch 1, dadurch gekennzeichnet, daß als organisches Treibmittel Isopentan verwendet wird.

4. Verwendung der nach den Verfahren gemäß Ansprüchen 1 bis 3 erhältlichen harten Polyurethanschaumstoffe im Bauwesen, für die Isolierung des Motorbereichs von Last- und Personenkraftwagen, als Beschichtungsstoffe und zur flächigen Isolierung von Motorhauben zwecks Schallschutz.

## Claims

1. A process for the production of rigid polyurethane foams by reaction of
1) polyisocyanates with
2) polyesters containing at least two isocyanate-reactive hydrogen atoms and having a molecular weight of 400 to 10,000, optionally together partly (up to 50% by weight, based on polyester) with polyethers, polycarbonates, polylactones and polyamides containing at least 2 hydroxyl groups and having a molecular weight of 400 to 10,000,
in the presence of
3) water and organic blowing agents and
4) flameproofing agents and also
5) compounds containing at least two isocyanate-reactive hydrogen atoms and having a molecular weight in the range from 32 to 399 as crosslinking agents
and optionally in the presence of
6) auxiliaries and additives known per se,
characterized in that in that C₁₋₆ hydrocarbons are used as the organic blowing agent, component 3), and products liquid at 20°C are used as the flameproofing agent 4) and in that the polyester component 2), the flameproofing agent 4) and the crosslinking component 5) are used as the formulation in which
component 2) is present in a quantity of 15 to 35 parts by weight,
component 4) is present in a quantity of 50 to 80 parts by weight and
component 5) is present in a quantity of 5 to 15 parts by weight,
the parts by weight of these components adding up to 100.

2. A process as claimed in claim 1, characterized in that pentane is used as the organic blowing agent.

3. A process as claimed in claim 1, characterized in that isopentane is used as the organic blowing agent.

4. The use of the rigid polyurethane foams obtainable by the process claimed in claims 1 to 3 in the building industry, for insulation in and around the engine compartment of trucks and automobiles, as coating materials and for the noise-proof insulation of engine bonnets.

## Revendications

1. Procédé pour la préparation de mousses rigides de polyuréthane en faisant réagir :
1) des polyisocyanates avec
2) des polyesters de poids moléculaires compris entre 400 et 10 000 présentant au moins deux atomes d'hydrogène actifs par rapport aux isocyanates, éventuellement en utilisant simultanément de manière proportionnelle (jusqu'à 50 % en poids, rapportés au polyester) des polyéthers, des polycarbonates, des polylactones et des polyamides de poids moléculaires compris entre 400 et 10 000, présentant au moins deux groupes hydroxyles, en présence
3) d'eau et d'agents moussants organiques et
4) d'agents ignifuges ainsi que
5) de composés présentant aux moins deux atomes d'hydrogène capables de réagir avec les isocyanates et un poids moléculaire compris entre 32 et 399 en tant qu'agents réticulants, éventuellement en présence
6) de produits auxiliaires et ajoutés connus en eux-même,
caractérisé en ce qu'on utilise comme agent moussant organique du constituant 3) des hydrocarbures en C₁-C₆ et comme agent ignifuge 4) des produits liquides à 20°C et qu'on emploie le constituant de polyester 2), l'agent ignifuge 4) et le constituant d'agent réticulant 5) comme formulation, dans laquelle
le constituant 2) est contenu de 15 à 35 parties en poids,
le constituant 4) dans une quantité de 50 à 80 parties en poids et
le constituant 5) dans une quantité de 5 à 15 parties en poids, le total des parties en poids de ces constituants étant égal à 100.

2. Procédé selon la revendication 1, caractérisé en ce qu'on utilise comme agent moussant organique du pentane.

3. Procédé selon la revendication 1, caractérisé en ce qu'on utilise comme agent moussant organique de l'isopentane.

4. Utilisation des mousses rigides de polyuréthane obtenues selon le procédé selon les revendications 1 à 3 dans le bâtiment, pour l'isolation du domaine du moteur des voitures particulières et des camions, comme matériaux de revêtement et pour l'isolation en surface de capots de moteurs à des fins d'isolation acoustique.
